# EUROPEAN PATENT APPLICATION

(11) **EP 4 618 279 A1**
(43) Date of publication of application: **17.09.2025**
(21) Application number: 23936304.7
(22) Date of filing: 08.08.2023
(51) Int. Cl.: H01M 50/242, H01M 50/244, H01M 50/289, H01M 50/249, H01M 50/209

(54) **BATTERY AND ELECTRICAL DEVICE**

(30) Priority: 06.05.2023 CN 202310500535
(71) Applicant: Contemporary Amperex Technology (Hong Kong) Limited, Central (HK)
(72) Inventor: WU, Kai, Ningde, Fujian 352100 (CN); HOU, Yujia, Ningde, Fujian 352100 (CN)
(74) Representative: Gong, Jinping
(86) International application number: PCT/CN2023/111817
(87) International publication number: WO 2024/229997

(57) **Abstract**

A battery and an electric apparatus are provided. The battery includes a box, at least one battery cell group, a plurality of reinforcing pieces, and a connecting piece. The box includes a first limiting portion and a second limiting portion disposed opposite each other in a first direction. The at least one battery cell group is disposed in the box and located between the first limiting portion and the second limiting portion, and the battery cell group includes a plurality of battery cells arranged in the first direction. The plurality of reinforcing pieces are disposed in the box and located between the first limiting portion and the second limiting portion. The plurality of reinforcing pieces are spaced apart in the first direction, and at least one of the battery cells is disposed between two adjacent ones of the reinforcing pieces. One end of the connecting piece is connected to the first limiting portion, and the other end of the connecting piece is connected to the second limiting portion. The battery with the structure can strengthen rigidity of the box, and improve force-bearing performance of the box, thereby reducing a degree of damage to battery cells after a collision.

## Description

### CROSS-REFERENCE TO RELATED APPLICATIONS

This application claims priority to Chinese Patent Application No. CN 2023105005354, filed on May 6, 2023 and entitled "BATTERY AND ELECTRIC APPARATUS", which is incorporated herein by reference in its entirety.

### TECHNICAL FIELD

This application relates to the field of battery technologies, and specifically, to a battery and an electric apparatus.

### BACKGROUND

Energy saving and emission reduction are crucial to sustainable development of the automobile industry. Electric vehicles have become an important part of the sustainable development of the automobile industry due to advantages of the electric vehicles in energy saving and environmental protection. For the electric vehicles, a battery technology is an important factor related to their development.

In the battery technology, how to reduce a degree of damage to a battery cell after a collision is an urgent technical problem to be resolved.

### SUMMARY

Embodiments of this application provide a battery and an electric apparatus, which can effectively improve force-bearing performance of an overall structure of the battery, thereby reducing a degree of damage to a battery cell after a collision.

According to a first aspect, this application provides a battery, including:
a box including a first limiting portion and a second limiting portion disposed opposite each other in a first direction;
at least one battery cell group that is disposed in the box and located between the first limiting portion and the second limiting portion, where the battery cell group includes a plurality of battery cells arranged in the first direction;
a plurality of reinforcing pieces that are disposed in the box and located between the first limiting portion and the second limiting portion, where the plurality of reinforcing pieces are spaced apart in the first direction, and at least one of the battery cells is disposed between two adjacent ones of the reinforcing pieces; and
a connecting piece, where one end of the connecting piece is connected to the first limiting portion, and the other end of the connecting piece is connected to the second limiting portion.

In the technical solutions of this application, the box includes the first limiting portion and the second limiting portion disposed opposite each other in the first direction. The at least one battery cell group is disposed in the box and located between the first limiting portion and the second limiting portion, and the battery cell group includes the plurality of battery cells arranged in the first direction, so that the first limiting portion and the second limiting portion can play a role in limiting the plurality of battery cells in the first direction, thereby limiting expansion of the battery cells in the first direction. This can improve internal cycle performance of the battery cells, and prolong a service life of the battery cells. The plurality of reinforcing pieces are disposed in the box and located between the first limiting portion and the second limiting portion, the plurality of reinforcing pieces are spaced apart in the first direction, and at least one of the battery cells is disposed between two adjacent ones of the reinforcing pieces. This can improve rigidity of the box, protect the battery cells when the battery collides, and reduce a degree of damage to the battery cells. One end of the connecting piece is connected to the first limiting portion, and the other end of the connecting piece is connected to the second limiting portion. This can strengthen the box in the first direction, resist deformation of the box in the first direction, further improve the rigidity of the box, and improve force-bearing performance of the box, thereby reducing a degree of damage to the battery cells after a collision, improving stability of an overall structure of the battery, and prolonging a service life of the battery.

According to some embodiments of this application, the connecting piece is located at an end of the battery cell in a third direction, a projection of the reinforcing piece intersects with a projection of the connecting piece in the third direction, and the third direction is perpendicular to the first direction.

In the foregoing technical solution, the connecting piece is located at an end of the battery cell in the third direction, and does not occupy arrangement space of the battery cells, thereby reducing occupation of space used for accommodating the battery cells in the box, and further reducing impact on energy density of the battery. The projection of the reinforcing piece intersects with the projection of the connecting piece in the third direction, so that the reinforcing piece and the connecting piece can strengthen the rigidity of the box in two intersecting directions, and the force-bearing performance of the box can be further improved, thereby reducing the degree of damage to the battery cells after a collision, and improving the stability of the overall structure of the battery.

According to some embodiments of this application, the first direction is perpendicular to a surface with a largest area of the battery cell.

In the foregoing technical solution, insertion and extraction of metal ions in an electrode active material during charging and discharging of the battery cell cause expansion and contraction of the battery cell. In an ideal state, a size change of the material should be reversible in a process of insertion and extraction of the metal ions. However, in an actual situation, some metal ions cannot be completely extracted from an anode due to a change in balance of the battery cell, or are deposited on a surface of the anode as an insoluble by-product during cycling. This causes irreversible expansion of the battery cell. Impurities in an electrolyte inside the battery cell or a low electrochemical window of the electrolyte may cause the electrolyte to decompose, generating gas and causing expansion of the battery cell. A manufacturing process of the battery cell may also cause expansion of the battery cell. For example, poor packaging that may allow moisture to enter the battery cell and other reasons also cause expansion of the battery cell. Therefore, after being used for a period of time, the battery cell expands, and the expansion of the battery cell is mainly reflected on the surface with the largest area of the battery cell. The first direction is perpendicular to the surface with the largest area of the battery cell, so that the reinforcing piece can limit expansion of the surfaces with the largest area of the plurality of battery cells, and the connecting piece can also strengthen the rigidity of the box in the first direction. Therefore, the expansion of the surfaces with the largest area of the plurality of battery cells can be further limited, and the reinforcing piece and the connecting piece have a better limiting effect on the expansion of the battery cells. This can further improve the internal cycle performance of the battery cells, prolong the service life of the battery cells, and improve the stability of the overall structure of the battery.

According to some embodiments of this application, a length direction of the connecting piece is parallel to the first direction.

In the foregoing technical solution, the length direction of the connecting piece is parallel to the first direction, so that an acting force of the connecting piece connected between the first limiting portion and the second limiting portion is parallel to the first direction. That is, the acting force of the connecting piece all acts in the first direction, thereby reducing a problem that the force in the first direction is small due to acting of the acting force of the connecting piece in another direction. This can better limit the expansion of the plurality of battery cells in the first direction, further improve the internal cycle performance of the battery cells, prolong the service life of the battery cells, and improve the stability of the overall structure of the battery.

According to some embodiments of this application, a length direction of the reinforcing piece is a second direction, and the second direction intersects with the first direction.

In the foregoing technical solution, the length direction of the reinforcing piece is the second direction, so that the reinforcing piece and the connecting piece can strengthen the rigidity of the box in the first direction and the second direction that intersect, thereby improving the force-bearing performance of the box, reducing the degree of damage to the battery cells after a collision, and having a good limiting effect on the expansion of the battery cells. This can improve the internal cycle performance of the battery cells, prolong the service life of the battery cells, and improve the stability of the overall structure of the battery.

According to some embodiments of this application, the second direction is perpendicular to the first direction.

In the foregoing technical solution, the second direction is perpendicular to the first direction, so that the reinforcing piece and the connecting piece can strengthen the rigidity of the box in the first direction and the second direction that are perpendicular, thereby further improving the force-bearing performance of the box, reducing the degree of damage to the battery cells after a collision, and having a better limiting effect on the expansion of the battery cells. This can further improve the internal cycle performance of the battery cells, prolong the service life of the battery cells, and improve the stability of the overall structure of the battery.

According to some embodiments of this application, the box further includes a mounting wall, both the first limiting portion and the second limiting portion are connected to the mounting wall, and the connecting piece is located at an end of the battery cell facing away from the mounting wall.

In the foregoing technical solution, the box further includes the mounting wall, to jointly form space for accommodating the battery cells. The first limiting portion and the second limiting portion are connected to the mounting wall, to play a role in strengthening the rigidity of the box in the first direction. The connecting piece is located at the end of the battery cell facing away from the mounting wall, to reduce occupation of the space for accommodating the battery cells in the box, thereby reducing the impact on the energy density of the battery, and helping improve the energy density of the battery.

According to some embodiments of this application, the battery cell includes a housing and an electrode terminal. The housing has a first wall facing away from the mounting wall, the electrode terminal is disposed on the first wall, and the connecting piece abuts against the first wall.

In the foregoing technical solution, the battery cell includes the housing and the electrode terminal, the housing has the first wall facing away from the mounting wall, the electrode terminal is disposed on the first wall, and the connecting piece abuts against the first wall that is of the housing and that faces away from the mounting wall. This can play a role in limiting the battery cells, make locations of the battery cells more stable, and improve the stability of the overall structure of the battery.

According to some embodiments of this application, the projection of the connecting piece does not overlap with a projection of the electrode terminal in the third direction, and the third direction is parallel to a thickness direction of the mounting wall.

In the foregoing technical solution, the projection of the connecting piece does not overlap with the projection of the electrode terminal in the third direction, so that a possibility that the connecting piece blocks the electrode terminal can be reduced, a connection between the electrode terminal and another component is facilitated, and reliability of a connection between the battery cell and another component is improved. In addition, a possibility that an external force applied to the connecting piece acts on the electrode terminal can be reduced, so that a role in protecting the electrode terminal is played.

According to some embodiments of this application, the battery cell further includes a pressure relief mechanism. The pressure relief mechanism is disposed on the first wall, the projection of the connecting piece does not overlap with a projection of the pressure relief mechanism in the third direction, and the third direction is parallel to a thickness direction of the mounting wall.

In the foregoing technical solution, the projection of the connecting piece does not overlap with the projection of the pressure relief mechanism in the third direction, so that a possibility that the connecting piece blocks the pressure relief mechanism can be reduced, the pressure relief mechanism is facilitated to perform pressure relief, and reliability of the pressure relief mechanism is improved. In addition, a possibility that an external force applied to the connecting piece acts on the pressure relief mechanism can be reduced, so that a possibility of early pressure relief caused by damage to the pressure relief mechanism is reduced, and a role in protecting the pressure relief mechanism is played.

According to some embodiments of this application, the battery cell further includes a pressure relief mechanism. The pressure relief mechanism and the electrode terminal are disposed on different walls of the battery cell.

In the foregoing technical solution, the pressure relief mechanism and the electrode terminal are disposed on different walls of the battery cell, so that the connecting piece does not block the pressure relief mechanism, the pressure relief mechanism is facilitated to perform pressure relief, and reliability of the pressure relief mechanism is improved.

According to some embodiments of this application, the connecting piece abuts against an end portion of the first wall in the second direction, and the second direction intersects with the first direction.

In the foregoing technical solution, the connecting piece abuts against the end portion of the first wall in the second direction, so that a possibility that the connecting piece blocks components on the first wall of the battery cell can be reduced, and a role in limiting the battery cell can be well played. In addition, because the end portion of the first wall in the second direction has better force-bearing performance, the connecting piece abuts against the end portion of the first wall in the second direction, so that when the connecting piece is stressed and acts on the end portion of the first wall in the second direction, the battery cell is less likely to be damaged, and the degree of damage to the battery cell after a collision can be reduced.

According to some embodiments of this application, the connecting piece is bonded to the first wall.

In the foregoing technical solution, the connecting piece is bonded to the first wall, so that locations of the connecting piece and the battery cell can be more stable, the connecting piece can play a better role in limiting the battery cell in a plurality of directions (the first direction, the second direction and the third direction), and the connecting piece can better limit the expansion of the battery cell. This can further improve the internal cycle performance of the battery cell, prolong the service life of the battery cell, and improve the stability of the overall structure of the battery. In addition, an adhesive used for bonding the connecting piece and the first wall can also play a buffering role, to reduce a possibility that an external force applied to the connecting piece acts on the first wall to cause damage to the battery cell.

According to some embodiments of this application, the battery includes a plurality of battery cell groups arranged in the second direction, a projection of each reinforcing piece overlaps with a projection of a battery cell in each battery cell group in the first direction, and the second direction intersects with the first direction.

In the foregoing technical solution, the battery includes the plurality of battery cell groups arranged in the second direction, so that the energy density of the battery can be increased. The projection of each reinforcing piece overlaps with the projection of the battery cell in each battery cell group in the first direction, so that each reinforcing piece can support and structurally strengthen a plurality of battery cells, and the stability of the overall structure of the battery is further improved.

According to some embodiments of this application, a gap is present between two adjacent battery cell groups in the second direction, and the connecting piece covers the gap.

In the foregoing technical solution, a gap is present between two adjacent battery cell groups in the second direction, so that locations of battery cells can be conveniently adjusted, and a possibility that the battery cells expand to squeeze adjacent battery cells can be reduced. The connecting piece covers the gap, so that a possibility that metal particles fall into the gap and cause damage or a short circuit to the battery cells can be reduced.

According to some embodiments of this application, a part of the connecting piece extends into the gap.

In the foregoing technical solution, a part of the connecting piece extends into the gap, so that the connecting piece can further play a role in limiting the battery cells in the second direction, the locations of the battery cells are more stable, and the stability of the overall structure of the battery is improved.

According to some embodiments of this application, one end of the connecting piece is threadedly connected or riveted to the first limiting portion, and the other end of the connecting piece is threadedly connected or riveted to the second limiting portion.

In the foregoing technical solution, one end of the connecting piece is threadedly connected or riveted to the first limiting portion, and the other end of the connecting piece is threadedly connected or riveted to the second limiting portion, so that a connection structure between the connecting piece and each of the first limiting portion and the second limiting portion is simple, mounting is convenient, and costs are saved. In addition, the connecting piece can be stably connected to each of the first limiting portion and the second limiting portion.

According to some embodiments of this application, the connecting piece is provided in plurality, the plurality of connecting pieces are spaced apart in the second direction, and the second direction intersects with the first direction.

In the foregoing technical solution, the connecting piece is provided in plurality, and the plurality of connecting pieces are spaced apart in the second direction, so that the rigidity of the box can be further strengthened, thereby better limiting the expansion of the plurality of battery cells in the first direction. This improves the internal cycle performance of the battery cells, prolongs the service life of the battery cells, and improves the stability of the overall structure of the battery.

According to some embodiments of this application, a chamber for accommodating a heat exchange medium is formed inside the reinforcing piece, and the chambers of the plurality of reinforcing pieces communicate with each other.

In the foregoing technical solution, the chamber for accommodating the heat exchange medium is formed inside the reinforcing piece, and the chambers of the plurality of reinforcing pieces communicate with each other, so that fluidity of the heat exchange medium in the chambers can be effectively improved, thereby further improving heat exchange efficiency of the reinforcing pieces. In addition, the chambers of the plurality of reinforcing pieces communicate with each other, so that quantities of liquid inlet pipes and liquid outlet pipes can be reduced, and space occupied by the liquid inlet pipes and the liquid outlet pipes can be further reduced. This helps further improve the energy density of the battery.

According to a second aspect, this application provides an electric apparatus, including the battery described in any one of the foregoing solutions, where the battery is used for providing electric energy.

### BRIEF DESCRIPTION OF DRAWINGS

To describe the technical solutions in embodiments of this application more clearly, the following briefly describes the accompanying drawings used for describing embodiments of this application. It should be understood that the accompanying drawings below show only some embodiments of this application, and therefore should not be considered as a limitation on the scope. A person of ordinary skill in the art may still derive other related drawings from these accompanying drawings without creative efforts.
FIG. 1 is a diagram of a structure of a vehicle according to some embodiments of this application;
FIG. 2 is an exploded view of a structure of a battery according to some embodiments of this application;
FIG. 3 is a diagram of a three-dimensional structure of a battery according to some embodiments of this application;
FIG. 4 is a partially enlarged diagram of the battery in FIG. 3 at a position A;
FIG. 5 is an exploded view of a structure of a battery according to some embodiments of this application;
FIG. 6 is a diagram of a three-dimensional structure of a battery cell according to some embodiments of this application; and
FIG. 7 is a schematic front view of a part of a structure of a battery according to some embodiments of this application.

### Reference signs:

1000: vehicle; 100: battery; 110: box; 111: first sub-box; 1111: first surface; 1112: mounting wall; 112: second sub-box; 113: first limiting portion; 114: second limiting portion; 120: battery cell group; 121: battery cell; 122: housing; 1221: main shell; 1222: first wall; 123: electrode terminal; 124: pressure relief mechanism; 130: reinforcing piece; 140: connecting piece; 200: controller; 300: motor; X: first direction; Y: second direction; Z: third direction.

### DESCRIPTION OF EMBODIMENTS

To make the objectives, technical solutions, and advantages of embodiments of this application clearer, the following clearly describes the technical solutions in embodiments of this application with reference to the accompanying drawings in embodiments of this application. It is clear that the described embodiments are merely some rather than all of embodiments of this application. All other embodiments obtained by a person of ordinary skill in the art based on embodiments of this application without creative efforts shall fall within the protection scope of this application.

Unless otherwise defined, all technical and scientific terms used in this application have same meanings as those usually understood by a person skilled in the art of this application. The terms used in the specification of this application are merely intended to describe the specific embodiments rather than to limit this application. The terms "include", "have", and any variants thereof in the specification, claims, and brief description of drawings of this application are intended to cover a non-exclusive inclusion.

In the specification, claims, or accompanying drawings of this application, the terms "first", "second", and the like are intended to distinguish between different objects rather than to describe a particular order or a primary-secondary relationship.

An "embodiment" mentioned in this application indicates that a particular feature, structure, or characteristic described with reference to this embodiment may be included in at least one embodiment of this application. The phrase shown in various locations in this specification does not necessarily refer to a same embodiment, and is not an independent or optional embodiment exclusive from another embodiment.

In the description of this application, it should be noted that, unless otherwise expressly specified and limited, terms "mount", "interconnect", "connect", and "attach" should be understood in a broad sense. For example, the terms may indicate a fixed connection, a detachable connection, or an integral connection, or may indicate a direct connection, an indirect connection through an intermediate medium, or internal communication between two elements. For a person of ordinary skill in the art, a specific meaning of the foregoing terms in this application may be understood based on a specific situation.

In this application, "a plurality of" means two or more (including two).

In this application, a battery cell may include a lithium-ion secondary battery, a lithium-ion primary battery, a lithium-sulfur battery, a sodium-ion battery, a magnesium ion battery, or the like. This is not limited in embodiments of this application. The battery cell may be flat, rectangular, or in another shape. This is also not limited in embodiments of this application.

The battery mentioned in embodiments of this application is a single physical module that includes a plurality of battery cells to provide a higher voltage and capacity. For example, the battery mentioned in this application may include a battery module, a battery pack, or the like. The battery generally may further include a box for packaging one or more battery cells or a plurality of battery modules. The box can prevent a liquid or another foreign matter from affecting charging or discharging of the battery cells.

The battery cell includes an electrode assembly and an electrolyte. The electrode assembly includes a positive electrode plate, a negative electrode plate, and a separator. Working of the battery cell mainly relies on migration of metal ions between the positive electrode plate and the negative electrode plate. The positive electrode plate includes a positive electrode current collector and a positive electrode active substance layer. The positive electrode active substance layer is applied on a surface of the positive electrode current collector, and the current collector that is not coated with the positive electrode active substance layer serves as a positive electrode tab. A lithium-ion battery is used as an example. The positive electrode current collector may be made of aluminum, and the positive electrode active substance may be lithium cobalt oxide, lithium iron phosphate, ternary lithium, lithium manganese oxide, or the like. The negative electrode plate includes a negative electrode current collector and a negative electrode active substance layer. The negative electrode active substance layer is applied on a surface of the negative electrode current collector, and the current collector that is not coated with the negative electrode active substance layer serves as a negative electrode tab. The negative electrode current collector may be made of copper, and the negative electrode active substance may be carbon, silicon, or the like. To allow a high current to pass through without any fusing, a plurality of positive electrode tabs are provided and stacked together, and a plurality of negative electrode tabs are provided and stacked together. The separator may be made of PP (polypropylene, polypropylene), PE (polyethylene, polyethylene), or the like.

The battery has outstanding advantages such as high energy density, low environmental pollution, high power density, a long service life, a wide application range, and a low self-discharge coefficient, and is an important part of new energy development nowadays. Development of the new energy industry drives the battery to gradually develop in the direction of large scale and integration.

However, when a large quantity of battery cells are stacked together, a requirement for force-bearing performance of the box of the battery becomes higher. The poor force-bearing performance of the box of the battery leads to deformation or damage because the box is susceptible to an external force. In addition, a role in limiting expansion of the battery cells cannot be well played, resulting in deformation or damage of the battery and a short service life.

Based on the foregoing considerations, this application provides a battery. The battery includes a box, at least one battery cell group, a plurality of reinforcing pieces, and a connecting piece. The box includes a first limiting portion and a second limiting portion disposed opposite each other in a first direction. The at least one battery cell group is disposed in the box and located between the first limiting portion and the second limiting portion, and the battery cell group includes a plurality of battery cells arranged in the first direction. The plurality of reinforcing pieces are disposed in the box and located between the first limiting portion and the second limiting portion, the plurality of reinforcing pieces are spaced apart in the first direction, and at least one of the battery cells is disposed between two adjacent ones of the reinforcing pieces. One end of the connecting piece is connected to the first limiting portion, and the other end of the connecting piece is connected to the second limiting portion.

In the technical solution of this application, the box includes the first limiting portion and the second limiting portion disposed opposite each other in the first direction. The at least one battery cell group is disposed in the box and located between the first limiting portion and the second limiting portion, and the battery cell group includes the plurality of battery cells arranged in the first direction, so that the first limiting portion and the second limiting portion can play a role in limiting the plurality of battery cells in the first direction, thereby limiting expansion of the battery cells in the first direction. This can improve internal cycle performance of the battery cells, and prolong a service life of the battery cells. The plurality of reinforcing pieces are disposed in the box and located between the first limiting portion and the second limiting portion, the plurality of reinforcing pieces are spaced apart in the first direction, and at least one of the battery cells is disposed between two adjacent ones of the reinforcing pieces. This can improve rigidity of the box, protect the battery cells when the battery collides, and reduce a degree of damage to the battery cells. One end of the connecting piece is connected to the first limiting portion, and the other end of the connecting piece is connected to the second limiting portion. This can strengthen the box in the first direction, resist deformation of the box in the first direction, further improve the rigidity of the box, and improve force-bearing performance of the box, thereby reducing a degree of damage to the battery cells after a collision, improving stability of an overall structure of the battery, and prolonging a service life of the battery.

The battery disclosed in embodiments of this application may be used in, but is not limited to, electric apparatuses such as vehicles, ships, or aircrafts. The battery disclosed in this application may be used to constitute a power supply system of the electric apparatus.

An embodiment of this application provides an electric apparatus using a battery as a power supply. The electric apparatus may be, but is not limited to, an electric tool, a battery driven vehicle, an electric vehicle, a ship, a spacecraft, and the like. The spacecraft may include an airplane, a rocket, a space shuttle, a spaceship, and the like.

The battery described in embodiments of this application is not merely limited to being applicable to the foregoing electric apparatus, but is further applicable to all electric apparatuses using batteries. However, for the sake of brevity, an example in which an electric apparatus is a vehicle is used for description in the following embodiments.

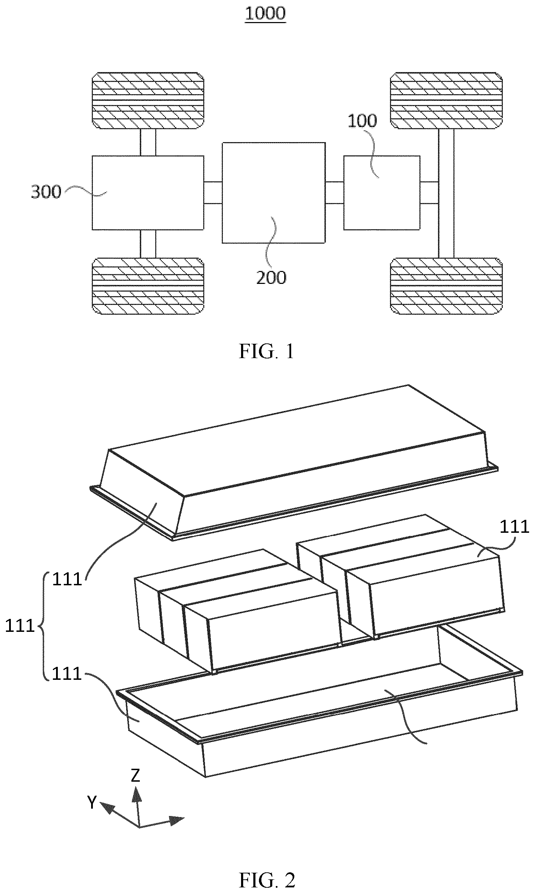

FIG. 1 is a diagram of a structure of a vehicle according to some embodiments of this application. A vehicle 1000 may be a fuel vehicle, a gas vehicle, or a new energy vehicle, and the new energy vehicle may be a battery electric vehicle, a hybrid electric vehicle, an extended-range vehicle, or the like. A battery 100 is disposed inside the vehicle 1000, and the battery 100 may be disposed at a bottom, a head, or a tail of the vehicle 1000. The battery 100 may be configured to supply power to the vehicle 1000. For example, the battery 100 may serve as an operational power supply for the vehicle 1000. The vehicle 1000 may further include a controller 200 and a motor 300. The controller 200 is configured to control the battery 100 to supply power to the motor 300, for example, to meet working power requirements for starting, navigation, and driving of the vehicle 1000.

In some embodiments of this application, the battery 100 cannot only serve as the operational power supply for the vehicle 1000, but also as a driving power supply for the vehicle 1000, to replace or partially replace fuel or natural gas to provide driving power for the vehicle 1000.

FIG. 2 is an exploded view of a structure of a battery according to some embodiments of this application. A battery 100 includes a box 110 and battery cells 121, and the battery cells 121 are accommodated in the box 110. The box 110 is configured to provide accommodating space for the battery cells 121, and the box 110 may use a variety of structures. In some embodiments, the box 110 may include a first sub-box 111 and a second sub-box 112. The first sub-box 111 and the second sub-box 112 fit together, and the first sub-box 111 and the second sub-box 112 jointly define the accommodating space for accommodating the battery cells 121. The first sub-box 111 may be a hollow structure having an opening at one end, the second sub-box 112 may be a plate structure, and the second sub-box 112 covers an opening side of the first sub-box 111, so that the first sub-box 111 and the second sub-box 112 jointly define the accommodating space. Both the first sub-box 111 and the second sub-box 112 may alternatively be hollow structures having an opening at one side, and an opening side of the second sub-box 112 covers an opening side of the first sub-box 111.

In some embodiments, the box 110 may be a cuboid.

In some other embodiments, the box 110 may alternatively be a cylinder.

In some embodiments, the box 110 can be made of aluminum, an aluminum alloy, or another metal material, so that the box 110 has high force-bearing performance.

In some other embodiments, the box 110 can alternatively be made of a non-metallic material with high strength, such as carbon fiber or rigid plastic.

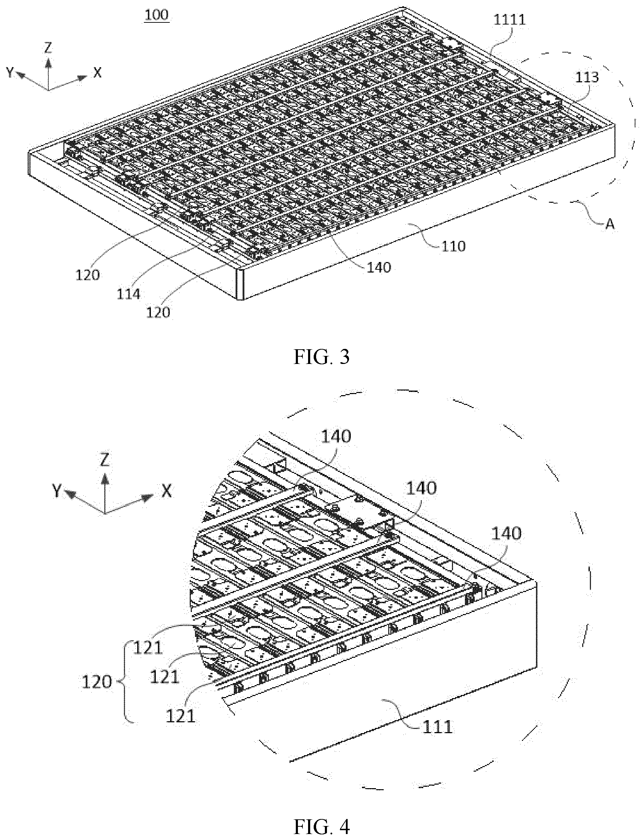

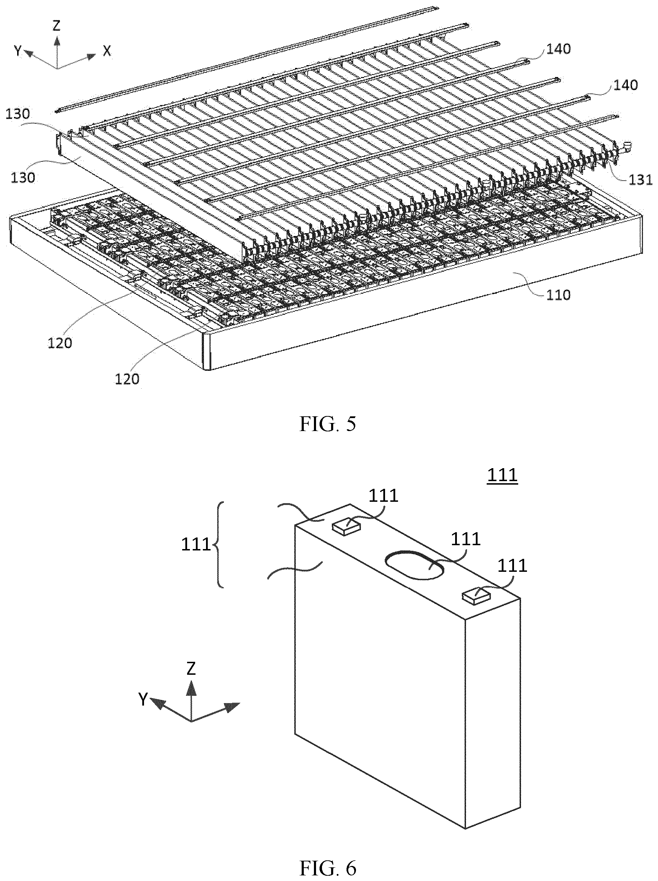

Refer to FIG. 3 to FIG. 5. FIG. 3 is a diagram of a three-dimensional structure of a battery according to some embodiments of this application. FIG. 4 is a partially enlarged diagram of the battery in FIG. 3 at a position A. FIG. 5 is an exploded view of a structure of a battery according to some embodiments of this application. Some embodiments of this application provide a battery 100, including a box 110, at least one battery cell group 120, a plurality of reinforcing pieces 130 and a connecting piece 140. The box 110 includes a first limiting portion 113 and a second limiting portion 114 disposed opposite each other in a first direction X. The at least one battery cell group 120 is disposed in the box 110 and located between the first limiting portion 113 and the second limiting portion 114, and the battery cell group 120 includes a plurality of battery cells 121 arranged in the first direction X. The plurality of reinforcing pieces 130 are disposed in the box 110 and located between the first limiting portion 113 and the second limiting portion 114, the plurality of reinforcing pieces 130 are spaced apart in the first direction X, and at least one of the battery cells 121 is disposed between two adjacent ones of the reinforcing pieces 130. One end of the connecting piece 140 is connected to the first limiting portion 113, and the other end of the connecting piece 140 is connected to the second limiting portion 114.

In some embodiments, the battery cells 121 may be cuboid-shaped, so that the plurality of battery cells 121 can be arranged in a matrix closely. This helps improve energy density of the battery 100.

In some other embodiments, the battery cells 121 may alternatively be flat, cylindrical, or in another shape.

In some embodiments, in the battery cell group 120, the plurality of battery cells 121 may be connected in series or in parallel, or in a parallel-series connection. The parallel-series connection means a combination of a series connection and a parallel connection of the plurality of battery cells 121. The plurality of battery cells 121 may be directly connected in series or in parallel, or in a parallel-series connection, and then the battery cell group 120 including the plurality of battery cells 121 is accommodated in the box 110. Certainly, the battery cell group 120 may alternatively be in a form that the plurality of battery cells 121 are first connected in series or in parallel, or in a parallel-series connection to form battery cell group modules, and then the plurality of battery cell group modules are connected in series or in parallel, or in a parallel-series connection to form a whole that is then accommodated in the box 110. The battery 100 may further include another structure. For example, the battery 100 may further include a busbar component, configured to implement an electrical connection between the plurality of battery cells 121.

In some embodiments, a surface that is on a periphery of the first sub-box 111 and that faces the second sub-box 112 is a first surface 1111, and the first surface 1111 is configured to connect to the second sub-box 112 in a sealed manner. The first limiting portion 113 and the second limiting portion 114 are located, in a third direction Z, on a side that is of a plane in which the first surface 1111 is located and that is away from the second sub-box 112, so that a possibility of interference between the connecting piece 140 and the second sub-box 112 can be reduced, thereby reducing impact on assembly of the battery 100.

In some embodiments, the first limiting portion 113 and the second limiting portion 114 may be limiting beams, limiting plates, and the like disposed in the box 110. The first limiting portion 113 and the second limiting portion 114 may be fastened in the box 110 through welding.

In some embodiments, the reinforcing piece 130 may be a thermal management component, and a chamber for accommodating a heat exchange medium is formed inside the reinforcing piece 130.

The battery 100 presents different electric cycle performance at different ambient temperatures. When the ambient temperature is too high or too low, the cycle performance of the battery 100 is reduced, and even a service life of the battery 100 is shortened. Battery thermal management is a technology to resolve a problem of thermal dissipation or thermal runaway caused by working of the battery 100 at a too high or too low temperature through a reasonable design based on impact of a temperature on performance of the battery 100 and an optimal charging and discharging temperature range of the specific battery 100 in combination with electrochemical characteristics and a heat generation mechanism of the battery 100, to improve overall performance of the battery 100. Thermal management of the battery 100 may be implemented by disposing a thermal management component.

The heat exchange medium may be liquid or gas, the liquid may include water, ethanol, and the like, and the gas may be air. Thermal management means to cool or heat the battery cells 121. For example, when the battery cells 121 generate heat or the battery 100 is in a hot environment, the battery cells 121 may be cooled. For another example, when the battery 100 is in a cold environment, the battery cells 121 may be heated.

In some other embodiments, the reinforcing piece 130 may alternatively be a heat exchange plate, and heat exchange of the battery cells 121 may be implemented directly by changing a temperature of the reinforcing piece 130.

In some other embodiments, the reinforcing piece 130 may alternatively be an air-cooled component, and communicates with the outside of the battery 100, so that air outside the battery 100 can flow through the reinforcing piece 130, to implement heat exchange of the battery cells 121.

In some other embodiments, the reinforcing piece 130 may be a metal plate, such as a steel plate or an aluminum plate, or a non-metallic plate with high strength, such as carbon fiber or rigid plastic.

In some embodiments, the reinforcing piece 130 is bonded to the battery cell 121, so that locations of the reinforcing piece 130 and the battery cell 121 can be more stable.

In some embodiments, the reinforcing piece 130 may be fastened to the box 110 through welding, a threaded connection, riveting, or bonding, so that a location of the reinforcing piece 130 in the box 110 is more stable.

In some embodiments, the connecting piece 140 may be disposed in a plate shape.

In some other embodiments, the connecting piece 140 may alternatively be made of a hollow profile or a special-shaped profile. For example, in a cross section perpendicular to the first direction X, the connecting piece 140 may be divided into a first part and a second part (not shown in the figure), the first part extends in a second direction Y, and the second part extends in the third direction Z and is connected to the first part.

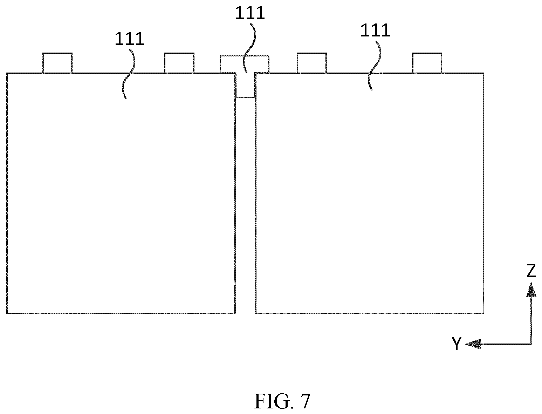

For example, both a quantity of first parts and a quantity of second parts are one, and the second part is connected to an end portion of the first part, so that the connecting piece 140 is L-shaped in the cross section perpendicular to the first direction X. Alternatively, both a quantity of first parts and a quantity of second parts are one, and the second part is connected to a middle portion of the first part, so that the connecting piece 140 is T-shaped (as shown in FIG. 7) in the cross section perpendicular to the first direction X.

For another example, a quantity of first parts is one, and a quantity of second parts is three, where two second parts are respectively connected to two ends of the first part, and one second part is connected to a middle portion of the first part, so that the connecting piece 140 is E-shaped in the cross section perpendicular to the first direction X.

For another example, a quantity of first parts is two, the two first parts are spaced apart in the third direction Z, and a quantity of second parts is three, where two second parts each are connected to two ends of the two first parts, and one second part is connected to middle portions of the two first parts, so that the connecting piece 140 is in a shape resembling a Chinese character for "sun" in the cross section perpendicular to the first direction X.

For another example, a quantity of first parts is three, the three first parts are spaced apart in the third direction Z, and a quantity of second parts is three, where two second parts each are connected to two ends of the three first parts, and one second part is connected to middle portions of the three first parts, so that the connecting piece 140 is in a 2x2 grid shape in the cross section perpendicular to the first direction X.

In some embodiments, the connecting piece 140 may be made of aluminum, an aluminum alloy, or another metal material, so that the battery 100 can have higher force-bearing performance. The connecting piece 140 may be coated with an insulation layer, so that a possibility that the plurality of battery cells 121 are short-circuited through the connecting piece 140 can be reduced.

In some other embodiments, the connecting piece 140 may alternatively be made of a non-metallic material with high strength, such as carbon fiber or rigid plastic, so that a possibility that the plurality of battery cells 121 are short-circuited through the connecting piece 140 can be reduced.

The box 110 includes the first limiting portion 113 and the second limiting portion 114 disposed opposite each other in the first direction X. The at least one battery cell group 120 is disposed in the box 110 and located between the first limiting portion 113 and the second limiting portion 114, and the battery cell group 120 includes the plurality of battery cells 121 arranged in the first direction X, so that the first limiting portion 113 and the second limiting portion 114 can play a role in limiting the plurality of battery cells 121 in the first direction X, thereby limiting expansion of the battery cells 121 in the first direction X. This can improve internal cycle performance of the battery cells 121, and prolong a service life of the battery cells 121. The plurality of reinforcing pieces 130 are disposed in the box 110 and located between the first limiting portion 113 and the second limiting portion 114, the plurality of reinforcing pieces 130 are spaced apart in the first direction X, and at least one of the battery cells 121 is disposed between two adjacent ones of the reinforcing pieces 130. This can improve rigidity of the box 110, protect the battery cells 121 when the battery 100 collides, and reduce a degree of damage to the battery cells 121. One end of the connecting piece 140 is connected to the first limiting portion 113, and the other end of the connecting piece 140 is connected to the second limiting portion 114. This can strengthen the box 110 in the first direction X, resist deformation of the box 110 in the first direction X, further improve the rigidity of the box 110, and improve the force-bearing performance of the box 110, thereby reducing a degree of damage to the battery cells 121 after a collision, improving stability of an overall structure of the battery 100, and prolonging a service life of the battery 100.

In some embodiments, the connecting piece 140 is located at one end of the battery cell 121 in the third direction Z. A projection of the reinforcing piece 130 intersects with a projection of the connecting piece 140 in the third direction Z, and the third direction Z is perpendicular to the first direction X.

In some embodiments, the connecting piece 140 is disposed at one end of the battery cell 121 in the third direction Z, and does not occupy arrangement space of the battery cells 121, thereby reducing occupation of space used for accommodating the battery cells 121 in the box 110, and further reducing impact on energy density of the battery 100. The projection of the reinforcing piece 130 intersects with the projection of the connecting piece 140 in the third direction Z, so that the reinforcing piece 130 and the connecting piece 140 can strengthen the rigidity of the box 110 in two intersecting directions (such as the first direction X and the second direction Y), and the force-bearing performance of the box 110 can be further improved, thereby reducing the degree of damage to the battery cells 121 after a collision, and improving the stability of the overall structure of the battery 100.

A projection means to project a shape of an object onto a plane by using a set of light. The light in embodiments is light emitted by a light source located at one end of the reinforcing piece 130 and the connecting piece 140 in the third direction Z. An emission direction of the light source is parallel to the third direction Z, the projected plane is a plane located at the other end of the reinforcing piece 130 and the connecting piece 140 in the third direction Z, and the plane is perpendicular to the third direction Z. That is, a center line of a projection line is perpendicular to a projection plane, and "projection" in this application means an orthographic projection.

In some embodiments, the first direction X is perpendicular to a surface with a largest area of the battery cell 121.

Insertion and extraction of metal ions in an electrode active material during charging and discharging of the battery cell 121 cause expansion and contraction of the battery cell 121. In an ideal state, a size change of the material should be reversible in a process of insertion and extraction of the metal ions. However, in an actual situation, some metal ions cannot be completely extracted from an anode due to a change in balance of the battery cell 121, or are deposited on a surface of the anode as an insoluble by-product during cycling. This causes irreversible expansion of the battery cell 121. Impurities in an electrolyte inside the battery cell 121 or a low electrochemical window of the electrolyte may cause the electrolyte to decompose, generating gas and causing expansion of the battery cell 121. A manufacturing process of the battery cell 121 may also cause expansion of the battery cell 121. For example, poor packaging that may allow moisture to enter the battery cell 121 and other reasons also cause expansion of the battery cell 121.

Therefore, after being used for a period of time, the battery cell 121 expands, and the expansion of the battery cell 121 is mainly reflected on the surface with the largest area of the battery cell 121. The first direction X is perpendicular to the surface with the largest area of the battery cell 121, so that the reinforcing piece 130 can limit expansion of the surfaces with the largest area of the plurality of battery cells 121, and the connecting piece 140 can also strengthen the rigidity of the box 110 in the first direction X. Therefore, the expansion of the surfaces with the largest area of the plurality of battery cells 121 can be further limited, and the reinforcing piece 130 and the connecting piece 140 have a better limiting effect on the expansion of the battery cells 121. This can further improve the internal cycle performance of the battery cells 121, prolong the service life of the battery cells 121, and improve the stability of the overall structure of the battery 100.

In some other embodiments, the first direction X may alternatively be perpendicular to a surface with a small area of the battery cell 121, and can also play a role in limiting the expansion of the battery cells 121, thereby improving the internal cycle performance of the battery cells 121, prolonging the service life of the battery cells 121, and improving the stability of the overall structure of the battery 100.

In some embodiments, the reinforcing piece 130 is bonded to the surface with the largest area of the battery cell 121, so that locations of the reinforcing piece 130 and the battery cell 121 can be more stable.

In some embodiments, a length direction of the connecting piece 140 is parallel to the first direction X.

The length direction of the connecting piece 140 may be a direction in which a size of the connecting piece 140 is the largest.

The length direction of the connecting piece 140 is parallel to the first direction X, so that an acting force of the connecting piece 140 connected between the first limiting portion 113 and the second limiting portion 114 is parallel to the first direction X. That is, the acting force of the connecting piece 140 all acts in the first direction X, thereby reducing a problem that the force in the first direction X is small due to acting of acting force of the connecting piece 140 in another direction. This can better limit the expansion of the plurality of battery cells 121 in the first direction X, further improve the internal cycle performance of the battery cells 121, prolong the service life of the battery cells 121, and improve the stability of the overall structure of the battery 100.

In some other embodiments, the length direction of the connecting piece 140 may alternatively be inclined relative to the first direction X, so that a part of a component force of the connecting piece 140 is parallel to the first direction X, and a role in limiting the expansion of the battery cells 121 can be played, thereby improving the internal cycle performance of the battery cells 121, prolonging the service life of the battery cells 121, and improving the stability of the overall structure of the battery 100.

In some embodiments, a length direction of the reinforcing piece 130 is the second direction Y, and the second direction Y intersects with the first direction X.

The length direction of the reinforcing piece 130 may be a direction in which a size of the reinforcing piece 130 is the largest.

The length direction of the reinforcing piece 130 is the second direction Y, so that the reinforcing piece 130 and the connecting piece 140 can strengthen the rigidity of the box 110 in the first direction X and the second direction Y that intersect, thereby improving the force-bearing performance of the box 110, reducing the degree of damage to the battery cells 121 after a collision, and having a good limiting effect on the expansion of the battery cells 121. This can improve the internal cycle performance of the battery cells 121, prolong the service life of the battery cells 121, and improve the stability of the overall structure of the battery 100.

In some embodiments, the second direction Y is perpendicular to the first direction X, so that the reinforcing piece 130 and the connecting piece 140 can strengthen the rigidity of the box 110 in the first direction X and the second direction Y that are perpendicular, thereby further improving the force-bearing performance of the box 110, reducing the degree of damage to the battery cells 121 after a collision, and having a better limiting effect on the expansion of the battery cells 121. This can further improve the internal cycle performance of the battery cells 121, prolong the service life of the battery cells 121, and improve the stability of the overall structure of the battery 100.

In some other embodiments, the second direction Y may be inclined relative to the first direction X.

In some embodiments, the box 110 further includes a mounting wall 1112, both the first limiting portion 113 and the second limiting portion 114 are connected to the mounting wall 1112, and the connecting piece 140 is located at an end that is of the battery cell 121 and that faces away from the mounting wall 1112.

In some embodiments, the mounting wall 1112 may be a bottom wall of the box 110. This facilitates mounting of the battery cells 121.

In some other embodiments, the mounting wall 1112 may alternatively be a top wall of the box 110.

In some embodiments, the first limiting portion 113 and the second limiting portion 114 may be fastened to the mounting wall 1112 by fasteners, screws, and the like.

In some other embodiments, the first limiting portion 113 and the second limiting portion 114 may alternatively be fastened to the mounting wall 1112 through welding, bonding, and the like.

In some other embodiments, the first limiting portion 113 and the second limiting portion 114 may alternatively be integrally formed with the mounting wall 1112.

Both the first limiting portion 113 and the second limiting portion 114 are connected to the mounting wall 1112 of the box 110. This can play a role in strengthening the rigidity of the box 110 in the first direction X. The connecting piece 140 is located at the end that is of the battery cell 121 and that faces away from the mounting wall 1112. This can reduce occupation of the space used for accommodating the battery cells 121 in the box 110, thereby reducing the impact on the energy density of the battery 100, and helping improve the energy density of the battery.

Refer to FIG. 3 and FIG. 6. FIG. 6 is a diagram of a three-dimensional structure of a battery cell according to some embodiments of this application. In some embodiments, the battery cell 121 includes a housing 122 and electrode terminals 123. The housing 122 has a first wall 1222 facing away from the mounting wall 1112, the electrode terminals 123 are disposed on the first wall 1222, and the connecting piece 140 abuts against the first wall 1222.

The housing 122 is provided with accommodating space used for accommodating an electrode assembly and an electrolyte. In some embodiments, the housing 122 may include a main shell 1221 and an end cover (namely, the first wall 1222 in this embodiment). The main shell 1221 is a hollow structure having an opening at one end, the end cover is a plate structure and covers an opening side of the main shell 1221, and the main shell 1221 and the end cover jointly define the accommodating space used for accommodating the electrode assembly and the electrolyte.

In some other embodiments, both the main shell 1221 and the end cap may be hollow structures having an opening at one side, and an opening side of the end cap covers an opening side of the main shell 1221 to jointly form the accommodating space.

In some embodiments, the main shell 1221 and the end cover may be connected through welding.

In some other embodiments, the main shell 1221 and the end cover may alternatively be fastened through bonding, interference fit, and the like.

In some embodiments, the housing 122 may be a cuboid.

In some other embodiments, the housing 122 may alternatively be a cylinder.

In some embodiments, the housing 122 may be made of aluminum, an aluminum alloy, or another metal material, so that the battery cells 121 can have higher force-bearing performance.

The electrode terminal 123 is a metal component disposed on the housing 122, may be made of metal materials such as silver-plated copper, zinc-plated copper, copper, aluminum, and iron, and can play a role in conducting electricity and transmitting an electrical signal.

In some embodiments, the electrode terminal 123 may be disposed in the shape of a cuboid.

In some other embodiments, the electrode terminal 123 may alternatively be disposed in the shape of a cylinder, an elliptical cylinder, or the like.

The battery cell 121 includes the housing 122 and the electrode terminals 123. The housing 122 has the first wall 1222 facing away from the mounting wall 1112, the electrode terminals 123 are disposed on the first wall 1222, and the connecting piece 140 abuts against the first wall 1222. This can play a role in limiting the battery cells 121, make locations of the battery cells 121 more stable, and improve the stability of the overall structure of the battery 100.

In some other embodiments, the connecting piece 140 may alternatively be spaced apart from the first wall 1222, so that an external force applied to the battery 100 may act on the connecting piece 140 instead of directly acting on the battery cells 121, and a role in protecting the battery cells 121 is played.

In some embodiments, the projection of the connecting piece 140 does not overlap a projection of the electrode terminal 123 in the third direction Z, and the third direction Z is parallel to a thickness direction of the mounting wall 1112.

The projection of the connecting piece 140 does not overlap with the projection of the electrode terminal 123 in the third direction Z, so that a possibility that the connecting piece 140 blocks the electrode terminal 123 can be reduced, a connection between the electrode terminal 123 and another component is facilitated, and reliability of a connection between the battery cell 121 and another component is improved. In addition, a possibility that an external force applied to the connecting piece 140 acts on the electrode terminal 123 can be reduced, so that a role in protecting the electrode terminal 123 is played.

In some embodiments, the battery cell 121 further includes a pressure relief mechanism 124. The pressure relief mechanism 124 is disposed on the first wall 1222, the projection of the connecting piece 140 does not overlap with a projection of the pressure relief mechanism 124 in the third direction Z, and the third direction Z is parallel to a thickness direction of the mounting wall 1112.

The pressure relief mechanism 124 is a structure that is disposed on the housing 122 for pressure relief. When the battery cell 121 is in normal use, the pressure relief mechanism 124 is in a closed state. When pressure in the battery cell 121 is too high, the pressure relief mechanism 124 is opened, so that the inside and the outside of the battery cell 121 communicate with each other through an opening of the pressure relief mechanism 124, and gas in the battery cell 121 can flow to the outside of the battery cell 121 through the opening, thereby allowing the battery cell 121 to release pressure in time.

In some embodiments, the pressure relief mechanism 124 may be fastened to the housing 122 through welding, bonding, and the like, or may be integrally formed with the housing 122.

The projection of the connecting piece 140 does not overlap with the projection of the pressure relief mechanism 124 in the third direction Z, so that a possibility that the connecting piece 140 blocks the pressure relief mechanism 124 can be reduced, the pressure relief mechanism 124 is facilitated to perform pressure relief, and reliability of the pressure relief mechanism 124 is improved. In addition, a possibility that an external force applied to the connecting piece 140 acts on the pressure relief mechanism 124 can be reduced, so that a possibility of early pressure relief caused by damage to the pressure relief mechanism 124 is reduced, and a role in protecting the pressure relief mechanism 124 is played.

In some embodiments, the pressure relief mechanism 124 may be disposed in a middle portion of the first wall 1222 and located between the two electrode terminals 123, to facilitate relief of the gas in the battery cell 121 through the pressure relief mechanism 124 when the pressure in the battery cell 121 is too high.

In some other embodiments, the pressure relief mechanism 124 may alternatively be disposed at an end portion of the first wall 1222.

In some other embodiments, the pressure relief mechanism 124 and the electrode terminals 123 may alternatively be disposed on different walls of the battery cell 121, and the connecting piece 140 does not block the pressure relief mechanism 124. This facilitates pressure relief of the pressure relief mechanism 124, and improves the reliability of the pressure relief mechanism 124.

In some embodiments, the connecting piece 140 abuts against an end portion of the first wall 1222 in the second direction Y, and the second direction Y intersects with the first direction X.

The connecting piece 140 abuts against the end portion of the first wall 1222 in the second direction Y, so that a possibility that the connecting piece 140 blocks components on the first wall 1222 of the battery cell 121 can be reduced, and a role in limiting the battery cell 121 can be well played. In addition, because the end portion of the first wall 1222 in the second direction Y has better force-bearing performance, the connecting piece 140 abuts against the end portion of the first wall 1222 in the second direction Y, so that when the connecting piece 140 is stressed and acts on the end portion of the first wall 1222 in the second direction Y, the battery cell 121 is less likely to be damaged, and the degree of damage to the battery cell 121 after a collision can be reduced.

In some other embodiments, the connecting piece 140 may alternatively abut against a middle portion of the first wall 1222 in the second direction Y, so that the battery cell 121 is more evenly stressed, and the connecting piece 140 has a better limiting effect on the battery cell 121.

In some other embodiments, the connecting piece 140 is provided in plurality, where at least one connecting piece 140 may abut against the end portion of the first wall 1222 in the second direction Y, and at least one connecting piece 140 may abut against a middle portion of the first wall 1222 in the second direction Y.

In some embodiments, the connecting piece 140 is bonded to the first wall 1222.

The connecting piece 140 is bonded to the first wall 1222, so that locations of the connecting piece 140 and the battery cell 121 can be more stable, the connecting piece 140 can play a better role in limiting the battery cell 121 in a plurality of directions (the first direction X, the second direction Y, and the third direction Z), and the connecting piece 140 can better limit the expansion of the battery cell 121. This can further improve the internal cycle performance of the battery cell 121, prolong the service life of the battery cell 121, and improve the stability of the overall structure of the battery 100. In addition, an adhesive used for bonding the connecting piece 140 and the first wall 1222 can also play a buffering role, to reduce a possibility that an external force applied to the connecting piece 140 acts on the first wall 1222 to cause damage to the battery cell 121.

In some embodiments, the adhesive connecting the connecting piece 140 and the first wall 1222 may be an insulating adhesive, and a possibility of a short circuit between the plurality of battery cells 121 can be reduced.

In some other embodiments, the connecting piece 140 may alternatively be connected to the first wall 1222 through a fitting structure, such as a protrusion and a groove, or a buckle and a groove, so that locations of the connecting piece 140 and the battery cell 121 can be more stable, and the connecting piece 140 can play a better role in limiting the battery cell 121.

In some other embodiments, a part in which the connecting piece 140 is connected to the first wall 1222 may be provided with a buffer layer, so that a buffering role can be played when the battery 100 is stressed, to reduce a possibility that an external force applied to the connecting piece 140 acts on the first wall 1222 to cause damage to the battery cell 121.

In some embodiments, the battery 100 includes a plurality of battery cell groups 120 arranged in the second direction Y, a projection of each reinforcing piece 130 overlaps with a projection of a battery cell 121 in each battery cell group 120 in the first direction X, and the second direction Y intersects with the first direction X.

The battery 100 includes the plurality of battery cell groups 120 arranged in the second direction Y, so that the energy density of the battery 100 can be increased. The projection of each reinforcing piece 130 overlaps with the projection of the battery cell 121 in each battery cell group 120 in the first direction X, so that each reinforcing piece 130 can support and structurally strengthen a plurality of battery cells 121, and the stability of the overall structure of the battery 100 is further improved. In some embodiments, the connecting piece 140 abuts against first walls 1222 of two battery cells 121 adjacent to each other in the second direction Y in two adjacent battery cell groups 120. In this way, two adjacent battery cell groups 120 may share the same connecting piece 140, so that a quantity of connecting pieces 140 can be decreased, and costs can be reduced.

In some embodiments, a gap is present between two adjacent battery cell groups 120 in the second direction Y, and the connecting piece 140 covers the gap.

A gap is present between two adjacent battery cell groups 120 in the second direction Y, so that locations of battery cells 121 can be conveniently adjusted, and a possibility that the battery cells 121 expand to squeeze adjacent battery cells 121 can be reduced. The connecting piece 140 covers the gap, so that a possibility that metal particles fall into the gap and cause damage or a short circuit to the battery cells 121 can be reduced.

Refer to FIG. 3 and FIG. 7. FIG. 7 is a schematic front view of a part of a structure of a battery according to some embodiments of this application. In some embodiments, a part of the connecting piece 140 extends into the gap.

A part of the connecting piece 140 extends into the gap, so that the connecting piece 140 can further play a role in limiting the battery cells 121 in the second direction Y, the locations of the battery cells 121 are more stable, and the stability of the overall structure of the battery 100 is improved.

In some embodiments, one end of the connecting piece 140 is threadedly connected or riveted to the first limiting portion 113, and the other end of the connecting piece 140 is threadedly connected or riveted to the second limiting portion 114.

The threaded connection means to connect various components and parts tightly by using threaded connecting pieces (such as screws, bolts, and nuts) and various washers.

Riveting, namely, a rivet connection, is a method of connecting a plurality of parts by thickening a rivet shank located in a rivet hole of a part by using an axial force to form a rivet head.

One end of the connecting piece 140 is threadedly connected or riveted to the first limiting portion 113, and the other end is threadedly connected or riveted to the second limiting portion 114, so that a connection structure between the connecting piece 140 and each of the first limiting portion 113 and the second limiting portion 114 is simple, mounting is convenient, and costs are saved. In addition, the connecting piece 140 can be stably connected to each of the first limiting portion 113 and the second limiting portion 114.

In some other embodiments, the connecting piece 140 may alternatively be connected to the first limiting portion 113 and the second limiting portion 114 through bonding, buckling, and the like.

In some embodiments, the connecting piece 140 is provided in plurality, the plurality of connecting pieces 140 are spaced apart in the second direction Y, and the second direction Y intersects with the first direction X.

The connecting piece 140 is provided in plurality, and the plurality of connecting pieces 140 are spaced apart in the second direction Y, so that the rigidity of the box 110 can be further strengthened, thereby better limiting the expansion of the plurality of battery cells 121 in the first direction X. This improves the internal cycle performance of the battery cells 121, prolong the service life of the battery cells 121, and improve the stability of the overall structure of the battery 100.

Two adjacent connecting pieces 140 in the plurality of connecting pieces 140 respectively abut against two end portions of the first wall 1222 of the battery cell 121 in the second direction, so that both end portions of the first wall 1222 in the second direction can be limited, the battery cell 121 is uniformly stressed, and the limiting effect is better.

In some embodiments, a chamber for accommodating a heat exchange medium is formed inside the reinforcing piece 130, and the chambers of the plurality of reinforcing pieces 130 communicate with each other.

In some embodiments, the plurality of reinforcing pieces 130 may communicate with each other through pipes 131.

The chamber for accommodating the heat exchange medium is formed inside the reinforcing piece 130, and the chambers of the plurality of reinforcing pieces 130 communicate with each other, so that fluidity of the heat exchange medium in the chambers can be effectively improved, thereby further improving heat exchange efficiency of the reinforcing pieces 130. In addition, the chambers of the plurality of reinforcing pieces 130 communicate with each other, so that quantities of liquid inlet pipes and liquid outlet pipes can be reduced, and space occupied by a liquid inlet structure and a liquid outlet structure can be further reduced. This helps further improve the energy density of the battery 100.

Some embodiments of this application provide an electric apparatus, including the battery 100 described in any one of the foregoing solutions, and the battery 100 is configured to provide electric energy.

The electric apparatus may be any of the foregoing systems or devices using the battery 100.

Refer to FIG. 3 and FIG. 5. Some embodiments of this application provide a battery 100. The battery includes a box 110, a plurality of battery cell groups 120, a plurality of reinforcing pieces 130, and a plurality of connecting pieces 140. The box 110 includes a first limiting portion 113 and a second limiting portion 114 disposed opposite each other in a first direction X. The plurality of battery cell groups 120 are disposed in the box 110 and located between the first limiting portion 113 and the second limiting portion 114. The plurality of battery cell groups 120 are arranged in a second direction Y. Each battery cell group 120 includes a plurality of battery cells 121 arranged in the first direction X. The plurality of reinforcing pieces 130 are disposed in the box 110 and located between the first limiting portion 113 and the second limiting portion 114, the plurality of reinforcing pieces 130 are spaced apart in the first direction X, and a plurality of battery cells 121 are disposed between two adjacent reinforcing pieces 130. One end of the connecting piece 140 is connected to the first limiting portion 113, the other end of the connecting piece 140 is connected to the second limiting portion 114, and the plurality of connecting pieces 140 are spaced apart in the second direction Y.

The first direction X, the second direction Y, and the third direction Z are perpendicular to each other.

A length direction of the connecting piece 140 is parallel to the first direction X, and a length direction of the reinforcing piece 130 is the second direction Y.

The box 110 further includes a mounting wall 1112, the first limiting portion 113 and the second limiting portion 114 are connected to the mounting wall 1112, and the connecting piece 140 is located at an end that is of the battery cell 121 and that faces away from the mounting wall 1112.

The first direction X is perpendicular to a surface with a largest area of the battery cell 121.

The battery cell 121 includes a housing 122, electrode terminals 123 and a pressure relief mechanism 124. The housing 122 has a first wall 1222 facing away from the mounting wall 1112. The electrode terminals 123 and the pressure relief mechanism 124 are separately disposed on the first wall 1222. The connecting piece 140 is bonded to an end portion of the first wall 1222 in the second direction Y.

In a third direction Z, a projection of the connecting piece 140 does not overlap with a projection of the electrode terminal 123, and the projection of the connecting piece 140 does not overlap with a projection of the pressure relief mechanism 124.

One end of the connecting piece 140 is threadedly connected to the first limiting portion 113, and the other end is threadedly connected to the second limiting portion 114.

A chamber for accommodating a heat exchange medium is formed inside the reinforcing piece 130, and the chambers of the plurality of reinforcing pieces 130 communicate with each other.

It should be noted that embodiments in this application and features in embodiments may be combined with each other in the case of no conflict.

The foregoing descriptions are merely preferred embodiments of this application, and are not intended to limit this application. For a person skilled in the art, this application may have various modifications and variations. Any modifications, equivalent replacements, improvement, or the like made without departing from the spirit and principle of this application shall fall within the protection scope of this application.

## Claims

1. A battery, **characterized by** comprising:
a box comprising a first limiting portion and a second limiting portion disposed opposite each other in a first direction;
at least one battery cell group that is disposed in the box and located between the first limiting portion and the second limiting portion, wherein the battery cell group comprises a plurality of battery cells arranged in the first direction;
a plurality of reinforcing pieces that are disposed in the box and located between the first limiting portion and the second limiting portion, wherein the plurality of reinforcing pieces are spaced apart in the first direction, and at least one of the battery cells is disposed between two adjacent ones of the reinforcing pieces; and
a connecting piece, wherein one end of the connecting piece is connected to the first limiting portion, and the other end of the connecting piece is connected to the second limiting portion.

2. The battery according to claim 1, **characterized in that** the connecting piece is located at an end of the battery cell in a third direction, a projection of the reinforcing piece intersects with a projection of the connecting piece in the third direction, and the third direction is perpendicular to the first direction.

3. The battery according to claim 1, **characterized in that** the first direction is perpendicular to a surface with a largest area of the battery cell.

4. The battery according to claim 1, **characterized in that** a length direction of the connecting piece is parallel to the first direction.

5. The battery according to claim 1, **characterized in that** a length direction of the reinforcing piece is a second direction, and the second direction intersects with the first direction.

6. The battery according to claim 5, **characterized in that** the second direction is perpendicular to the first direction.

7. The battery according to any one of claims 1 to 6, **characterized in that** the box further comprises a mounting wall, both the first limiting portion and the second limiting portion are connected to the mounting wall, and the connecting piece is located at an end of the battery cell facing away from the mounting wall.

8. The battery according to claim 7, **characterized in that** the battery cell comprises a housing and an electrode terminal, wherein the housing has a first wall facing away from the mounting wall, the electrode terminal is disposed on the first wall, and the connecting piece abuts against the first wall.

9. The battery according to claim 8, **characterized in that** the projection of the connecting piece does not overlap with a projection of the electrode terminal in the third direction, and the third direction is parallel to a thickness direction of the mounting wall.

10. The battery according to claim 8, **characterized in that** the battery cell further comprises a pressure relief mechanism, the pressure relief mechanism is disposed on the first wall, the projection of the connecting piece does not overlap with a projection of the pressure relief mechanism in the third direction, and the third direction is parallel to a thickness direction of the mounting wall.

11. The battery according to claim 8, **characterized in that** the battery cell further comprises a pressure relief mechanism, and the pressure relief mechanism and the electrode terminal are disposed on different walls of the battery cell.

12. The battery according to claim 8, **characterized in that** the connecting piece abuts against an end portion of the first wall in the second direction, and the second direction intersects with the first direction.

13. The battery according to claim 8, **characterized in that** the connecting piece is bonded to the first wall.

14. The battery according to any one of claims 1 to 6, **characterized in that** the battery comprises a plurality of battery cell groups arranged in the second direction, a projection of each reinforcing piece overlaps with a projection of a battery cell in each battery cell group in the first direction, and the second direction intersects with the first direction.

15. The battery according to claim 14, **characterized in that** a gap is present between two adjacent battery cell groups in the second direction, and the connecting piece covers the gap.

16. The battery according to claim 15, **characterized in that** a part of the connecting piece extends into the gap.

17. The battery according to any one of claims 1 to 6, **characterized in that** one end of the connecting piece is threadedly connected or riveted to the first limiting portion, and the other end of the connecting piece is threadedly connected or riveted to the second limiting portion.

18. The battery according to any one of claims 1 to 6, **characterized in that** the connecting piece is provided in plurality, the plurality of connecting pieces are spaced apart in the second direction, and the second direction intersects with the first direction.

19. The battery according to any one of claims 1 to 6, **characterized in that** a chamber for accommodating a heat exchange medium is formed inside the reinforcing piece, and the chambers of the plurality of reinforcing pieces communicate with each other.

20. An electric apparatus, **characterized by** comprising the battery according to any one of claims 1 to 19, wherein the battery is configured to provide electric energy.
